# EUROPEAN PATENT APPLICATION

(11) **EP 4 749 093 A1**
(43) Date of publication of application: **27.05.2026**
(21) Application number: 25217807.4
(22) Date of filing: 21.11.2025
(51) Int. Cl.: F01D 5/28, B32B 18/00, F01D 25/12

(54) **MACHINED CMC PREFORM FOR A TURBINE AND CORRESPONDING METHOD**

(30) Priority: 21.11.2024 US 202418955000
(71) Applicant: RTX Corporation, Farmington, CT 06032 (US)
(72) Inventor: WASSERMAN, David, Hamden 06517 (US); LILES, Howard, Newington 06111 (US)
(74) Representative: Dehns

(57) **Abstract**

A preform (200) for a ceramic matrix composite (CMC) component having a flow path surface, such as a blade outer air seal (BOAS), a blade, a vane, or a combustor panel, includes a base preform (200) includes a polyvinyl butyral (PVB) tackifier for dimensional stability and has a corresponding flow path surface. One or more machined channels (210) are formed on the corresponding flow path surface of the base preform (200), and may include additional features such as ribs, trip strips, or pin fins. One or more overwrap plies are then disposed on the base preform (200) and cover the one or more machined channels (210) to form a cooling feature. The overwrapped base preform may then be densified to provide a CMC component with a cooling feature on the flow path surface.

## Description

### FIELD OF THE INVENTION

The subject matter disclosed herein relates to cooling of Ceramic Matrix Composite (CMC) components in a heated flow path of a turbine and, in particular, to creating microcircuit cooling features in a flow path side of the CMC flow path component via machining of a preform with subsequent overwrap.

### BACKGROUND OF THE INVENTION

Turbine blades, vanes, blade outer air seals (BOAS), and combustor panel liners made from high-temperature capable Ceramic Matrix Composites (CMCs) can increase turbine efficiency by reducing cooling air requirements. Silicon Carbide (SiC) based CMCs fabricated via Chemical Vapor Infiltration (CVI), Melt Infiltration (MI), Polymer Infiltration and Pyrolysis (PIP), and hybrids of CVI/MI and CVI/PIP possess high temperature capability. CMC components are fabricated from a near-net shape fiber preform, typically formed from fabric and tow layups.

Methods for cooling CMC flow path components are typically limited to coatings, film cooling holes, and backside impingement cooling. Internal cooling cavities can be created with graphite inserts but then these inserts must be removed from the densified part, which typically requires burning them out in a furnace. Cooling features can be cut into individual plies that can then be assembled to create the cavity in the preform of the component, but this introduces variation into the cavity geometry because of assembly tolerances associated with aligning each ply layer, and any distortion of the plies as they are wrapped around curves and complex surfaces. This process variation can affect the performance of the cooling features.

The above information disclosed in this Background section is only for understanding of the background of the inventive concepts and, therefore, it may contain information that does not constitute prior art.

### SUMMARY OF THE INVENTION

The present disclosure is directed, in a first aspect, to a preform for a ceramic matrix composite (CMC) component having a flow path surface. The preform for the CMC component essentially includes a base preform including a polyvinyl butyral (PVB) tackifier for dimensional stability and having a corresponding flow path surface, one or more machined channels formed on the corresponding flow path surface of the base preform, and one or more overwrap plies disposed on the base preform and covering the one or more machined channels to form a cooling feature.

In an example of the preform, the CMC component may be a turbine component selected from a blade outer air seal (BOAS), a blade, a vane, and a combustor panel.

In another example of the preform, the one or more machined channels may include an additional feature.

In a further example of the preform, the additional feature may be a support rib.

In yet another example of the preform, the additional feature may be a heat transfer feature selected from a trip strip and a pin fin.

In an example of the preform, a sacrificial support may be disposed in the one or more machined channels to support the one or more overwrap plies.

In another example of the preform, the cooling feature may be selected from a serpentine passage, a radial flow passage, and an impingement cavity.

The present disclosure is also directed, in a second aspect, to a method of forming a cooling feature on a flow path surface of a ceramic matrix composite (CMC) component of a turbine. The method is essentially limited to the steps of: dimensionally stabilizing a base preform with a polyvinyl butyral (PVB) tackifier, the base preform having a corresponding flow path surface; machining one or more channels on the corresponding flow path surface of the base preform; and overwrapping one or more plies onto the corresponding flow path surface of the base preform to cover the one or more machined channels and form the cooling feature.

In an example of the method, the CMC component may be selected from a blade outer air seal (BOAS), a blade, a vane, and a combustor panel.

In another example of the method, the limited steps may include densifying the overwrapped base preform to form the CMC component.

In a further example of the method, the limited steps may include machining an additional feature into the one or more channels.

In an example of the method, the additional feature may be a support rib.

In another example of the method, the additional feature may be a heat transfer feature selected from a trip strip and a pin fin.

In a further example of the method, the limited steps may include disposing a sacrificial flexible graphite sheet in the one or more channels to support the one or more overwrap plies, and burning out the flexible graphite sheet after densification.

In yet another example of the method, the limited steps may include disposing a sacrificial molybdenum sheet in the one or more channels to support the one or more overwrap plies, and leaching out the molybdenum sheet with acid after densification.

In an example of the method, the cooling feature may be selected from a serpentine passage, a radial flow passage, and an impingement cavity.

In another example of the method, the machining may be performed by milling, grinding, laser ablation, water-guided laser machining, or ultrasonic impact grinding.

In a further example of the method, the overwrapping of one or more plies may be limited to overwrapping one or two plies.

The present disclosure is further directed, in a third aspect, to a method of forming a cooling feature on a flow path surface of a ceramic matrix composite (CMC) component of a turbine selected from a blade outer air seal (BOAS), a blade, a vane, and a combustor panel. The method is essentially limited to steps of: dimensionally stabilizing a base preform with a polyvinyl butyral (PVB) tackifier, the base preform having a corresponding flow path surface; machining one or more channels on the corresponding flow path surface of the base preform, the one or more channels including a feature selected from a support rib, a trip strip, and/or a pin fin; overwrapping one or two plies onto the corresponding flow path surface of the base preform to cover the one or more machined channels and form the cooling feature; and densifying the overwrapped base preform to form the CMC component.

In another example of the method, the limited steps may include disposing a sacrificial support in the one or more channels prior to the overwrapping, and removing the support after densification.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1A is a schematic plan view of an embodiment of a flow path side of a BOAS segment base preform in accordance with the present disclosure;
FIG. 1B is a schematic cross section view A-A of the BOAS segment base preform of FIG. 1A in accordance with the present disclosure;
FIG. 1C is a schematic cross section view of the BOAS segment base preform of FIG. 1B with overwrap plies in accordance with the present disclosure;
FIG. 2A is a schematic plan view of an embodiment of a flow path side of a turbine vane airfoil base preform in accordance with the present disclosure;
FIG. 2B is a schematic cross section view B-B of the turbine vane airfoil base preform of FIG. 2A in accordance with the present disclosure;
FIG. 3 is a schematic cross section view of the turbine vane airfoil base preform of FIG. 2B with overwrap plies in accordance with the present disclosure;
FIG. 4A is a schematic cross section view of an embodiment of a channel in a base preform with flexible graphite support for the overwrap plies in accordance with the present disclosure;
FIG. 4B is a schematic cross section view of an embodiment of a channel in a base preform with a support rib for the overwrap plies in accordance with the present disclosure;
FIG. 4C is a schematic cross section view of an embodiment of a channel in a base preform with machined heat transfer features and overwrap plies in accordance with the present disclosure; and
FIG. 5 is an embodiment of a method in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

The present disclosure uses machining of a CMC component preform from the flow path side, prior to densification, to incorporate cooling features close to the hot wall. Once the bulk of the preform is assembled with a robust polyvinyl butyral (PVB) tackifier but prior to the installation of the overwrap of flow path ply (or plies), the preform is machined, such as by milling, grinding, laser ablation, and the like, to incorporate cooling features like cooling flow passages, such as serpentine passages, radial flow, impingement cavities, and the like. The machining may also incorporate heat transfer augmentation features, such as trip strips, pin fins, and the like. The machine flow path side of the component is then overwrapped with the final flow path ply (plies) to create a closed cavity that is separated from the flow path by a thin wall (1-2 plies) which effectively creates a skin core in the CMC component. Machining of the assembled, robustly-tackified preform provides more control and repeatability of the cooling feature form and location as opposed to trying to machine the features in individual plies and then laying up into the preform.

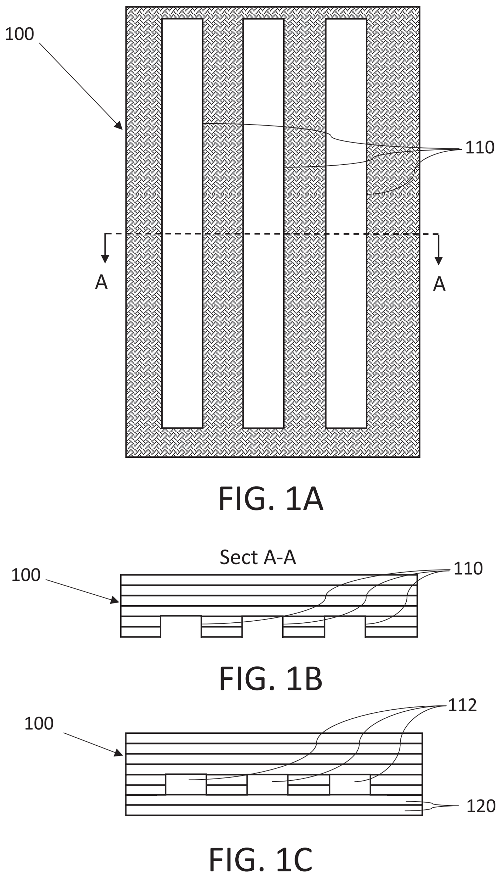

With regard to FIGS. 1A, 1B, and 1C, an embodiment of a preform segment 100 for a CMC component in the form of a turbine BOAS having a flow path surface is illustrated. In FIGS. 1A and 1B, channels 110 are formed in a corresponding flow path surface of the preform segment 100. In this embodiment, the preform segment 100 is a base preform including a polyvinyl butyral (PVB) tackifier for dimensional stability. As used herein, a base preform refers to a preform that has not been rigidized or partially densified. In one or more embodiments, the PVB tackifier may be disposed on each ply used to form the preform segment 100. For example, a ply with PVB tackifier may be cut to size, a protective sheet may be removed from the tackifier side of the ply, and the ply may be positioned and stuck to another ply to build up the preform segment 100. If the ply needs to be adjusted or repositioned, ethanol may be used to temporarily soften the PVB and permit adjustment. The use of the robust PVB tackifier permits the preform segment 100 to maintain sufficient dimensional stability during machining.

The one or more channels 110 formed on the corresponding flow path surface of the preform segment 100 are machined into the near-net preform segment 100. The machining may use a controlled machining process to reduce variation in the process and the resulting channels 110. The machining may involve milling, grinding, laser ablation, water-guided laser machining, ultrasonic impact grinding, or equivalents thereof.

The channels 110 illustrated in FIGS. 1A and 1B are straight, parallel channels 110. However, channels 110 are not limited thereto, and may take other forms useful for heat exchange, including but not limited to a serpentine passage, a radial flow passage, and/or an impingement cavity.

With regard to FIG. 1C, one or more overwrap plies 120 are disposed on the preform segment 100 and cover the one or more machined channels 110 to form a cooling feature 112.

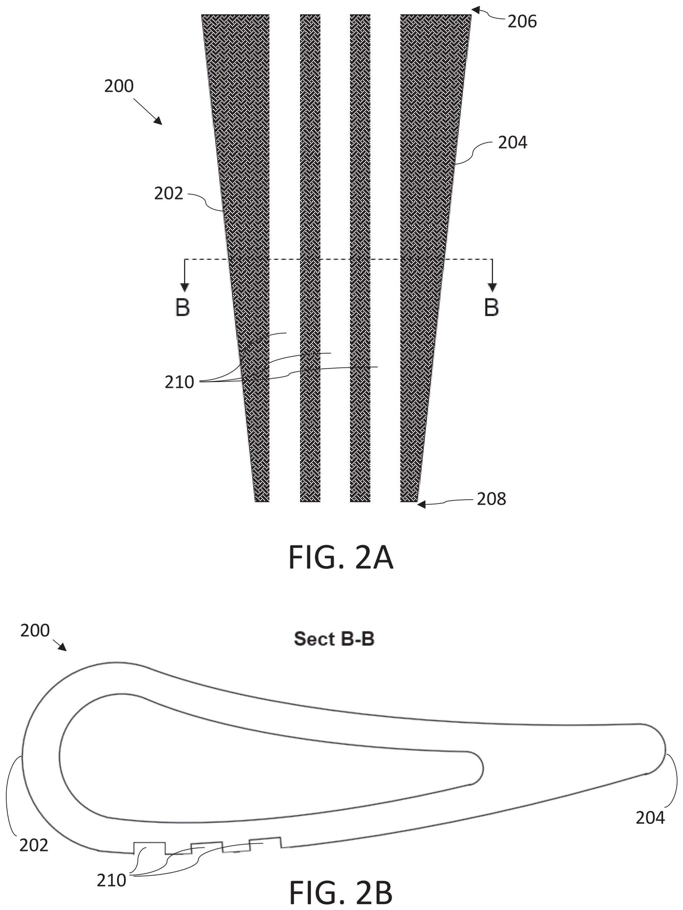

With regard to FIGS. 2A and 2B, an embodiment of a preform segment 200 for a CMC component in the form of a turbine vane having a flow path surface on a suction side is illustrated. In FIGS. 2A and 2B, the inner and outer platforms on the root 208 and tip 206 of the airfoil of preform segment 200 are omitted for simplicity. The channels 210 are formed in a corresponding flow path surface on the suction side of the airfoil preform segment 200, which includes a leading edge 202 and a trailing edge 204. In this embodiment, the preform segment 200 is also a base preform including a polyvinyl butyral (PVB) tackifier for dimensional stability.

The one or more channels 210 formed on the corresponding suction side flow path surface of the preform segment 200 are machined into the near-net airfoil preform segment 200. As with the embodiment of FIGS. 1A and 1B, the machining may use a controlled machining process to reduce variation in the process and the resulting channels 210. The machining may involve milling, grinding, laser ablation, water-guided laser machining, ultrasonic impact grinding, or equivalents thereof.

The channels 210 illustrated in FIGS. 2A and 2B are straight, parallel channels 210. However, channels 210 are not limited thereto, and may take other forms useful for heat exchange, including but not limited to a serpentine passage, a radial flow passage, and/or an impingement cavity.

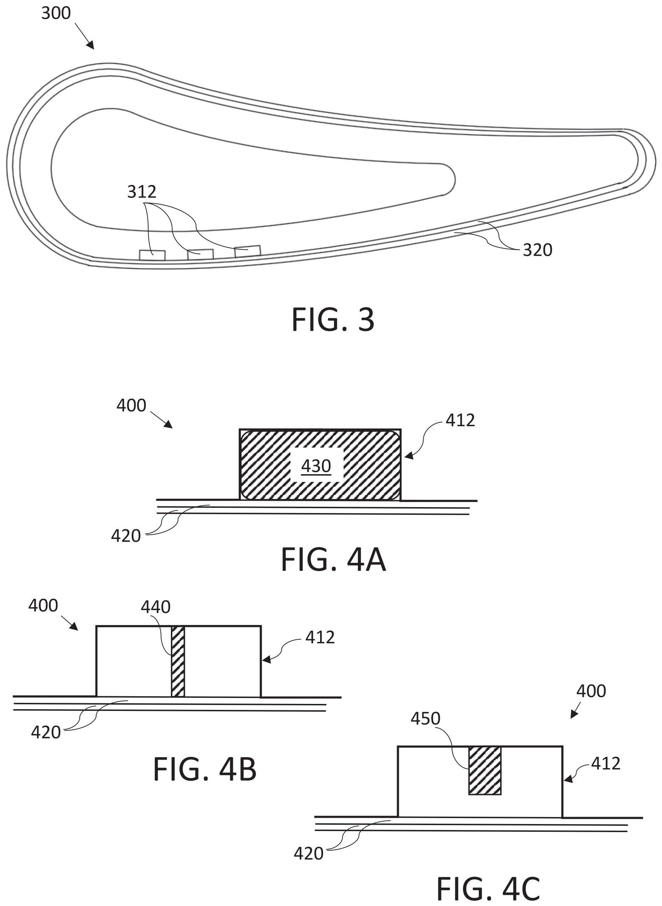

With regard to FIG. 3, one or more overwrap plies 320 are disposed on the preform segment 300 that corresponds to preform segment 200 of FIGS. 2A and 2B, and overwrap plies 320 cover the one or more machined channels 210 to form a cooling feature 312.

FIG. 4A illustrates a schematic cross section view of an embodiment of a cooling feature 412 in a base preform 400 with an optional sacrificial support 430 for supporting the overwrap plies 420 in accordance with an embodiment of the present disclosure. In one embodiment, the sacrificial support 430 may be a flexible graphite support formed, for example from GraFoil^{®} available from NeoGraf Solutions of Lakewood, OH, and be shaped and sized to substantially fill the machined channel of cooling feature 412. For example, a sheet of GraFoil may be die punched or otherwise cut to fill the machined channel of cooling feature 412. In another embodiment, the sacrificial support 430 may be a sheet of molybdenum, and be shaped and sized to substantially fill the machined channel of cooling feature 412. For example, the sheet of molybdenum may be stamped or otherwise cut to fill the machined channel of cooling feature 412. After supporting overwrap plies 420 during densification, sacrificial support 430 may be removed. For example, when GraFoil is used, it may be removed by burning it out, so that the cooling feature may be used for cooling fluid such as cooling air. When molybdenum sheet is used, it may be removed by leaching it out with acid.

FIG. 4B illustrates a schematic cross section view of an embodiment of a cooling feature 412 formed by a channel in a base preform 400 with a support rib 440 for the overwrap plies 420 in accordance with an embodiment the present disclosure. When the channel is being formed for cooling feature 412, the machining may also provide for formation of a support rib 440 to assist in supporting the overwrap plies 420, both to prevent sagging of overwrap plies 420 during densification and deflection of the flow path surface being cooled after densification of the CMC component. Support rib 440 may be continuous or discontinuous and may be used where the channel of cooling feature 412 is wide and can benefit from additional support.

FIG. 4C illustrates a schematic cross section view of an embodiment of a cooling feature 412 in a base preform 400 with machined heat transfer features 450 and overwrap plies 420 in accordance with another embodiment of the present disclosure. When the channel is being formed for cooling feature 412, the machining may also provide for formation of a heat transfer feature 450 within the channel. Heat transfer features 450 may include, but are not limited to trip strips (e.g., chevron-shaped or angled protrusions to cause turbulence), pin fins (e.g., cylindrical, conical, or frustoconical protrusions to cause turbulence), and the like to augment heat transfer between cooling fluid (e.g., cooling air) and the flow path surface of densified overwrap plies 420 by causing turbulence or other heat transfer augmentation.

Although the base preforms 100, 200, 300, and 400 are discussed with respect to BOAS segments and vane segments, the present disclosure is not limited thereto and may be a turbine component selected from a BOAS, a blade, a vane, a combustor panel, or any other CMC component of a turbine subject to a hot flow path that can benefit from a cooling feature.

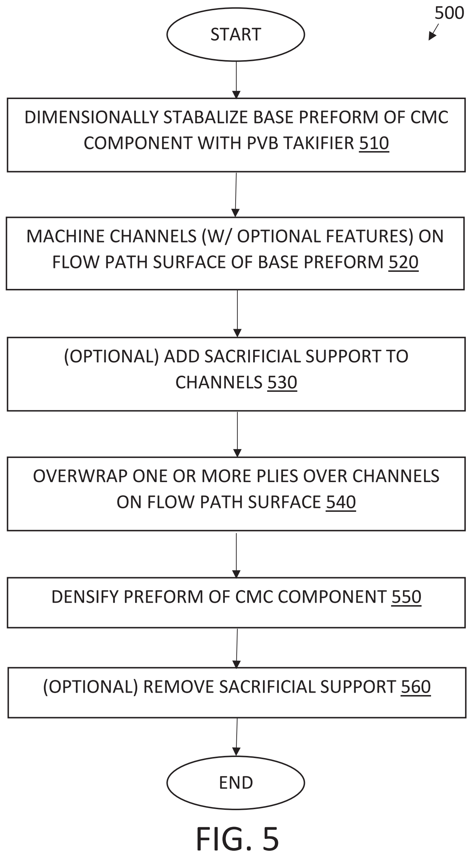

FIG. 5 is a flow diagram of an embodiment of a method 500 in accordance with the present disclosure. The method 500 related to forming a cooling feature on a flow path surface of a CMC component of a turbine.

At step 510, the method 500 includes dimensionally stabilizing a base preform with a polyvinyl butyral (PVB) tackifier, the base preform having a flow path surface corresponding to a flow path surface of the CMC component (e.g., suction side of a turbine vane). The base preform may be a segment of any turbine component, including a BOAS, a blade, a vane, a combustor panel, or any other CMC component of a turbine subject to a hot flow path that can benefit from a cooling feature. The base preform may be a near-net preform shape that substantially corresponds to the final CMC component. For example, the base preform may be built with a plurality of plies. Each ply with PVB tackifier may be cut to size, a protective sheet may be removed from the tackifier side of the ply, and the ply may be positioned and stuck to another ply to build up the preform from the plurality of plies.

In a next step 520, the method 500 includes machining one or more channels on the corresponding flow path surface of the base preform. The machining of step 520 may be performed by milling, grinding, laser ablation, water-guided laser machining, ultrasonic impact grinding, and/or any equivalent process. Step 520 may include the machining of additional features, such as support ribs within the channel or heat transfer augmentation features such as trip strips or pin fins within the channels.

Optionally, a sacrificial support such as GraFoil sheet or molybdenum sheet may be supplied into the machined channels to fill the channels and provide support for overwrap at a step 530. This step 530 may not be needed if the channels are sufficiently small in dimension relative to the overwrap or if support ribs are included in the machining of the channels in step 520.

In a next step 540, one or more plies (i.e., overwrap plies) are overwrapped over the channels on the flow path of the base preform. Typically, the overwrap plies will be wrapped oven an entire segment of the base preform. The plies wrapped over the channels form a preform version of the eventual cooling feature of the densified CMC component. In an embodiment of method 500, the overwrapping of one or more plies in step 540 includes overwrapping one or two plies.

In step 550, the base preform and overwrapped plies forming the preform of the CMC component is densified. Densification may include Chemical Vapor Infiltration (CVI), Melt Infiltration (MI), Polymer Infiltration and Pyrolysis (PIP), and hybrids of CVI/MI and CVI/PIP as is known in the art.

If optional step 530 is omitted, the method 500 is complete and ends. However, if step 530 is performed, a final step 560 of method 500 includes removing the sacrificial support (e.g., burning out the GraFoil or leaching out the molybdenum with acid) from the channel to provide an opening of for the cooling feature.

In various embodiments of the method 500, the cooling feature may be selected from a serpentine passage, a radial flow passage, and/or an impingement cavity.

Accordingly, in one embodiment of method 500 may include forming a cooling feature on a flow path surface of a CMC component of a turbine selected from a blade outer air seal (BOAS), a blade, a vane, and a combustor panel. The embodiment may include dimensionally stabilizing a base preform with a polyvinyl butyral (PVB) tackifier, the base preform having a corresponding flow path surface. The embodiment may also include machining one or more channels on the corresponding flow path surface of the base preform, the one or more channels including a feature selected from a support rib, a trip strip, and/or a pin fin, overwrapping one or two plies onto the corresponding flow path surface of the base preform to cover the one or more machined channels and form the cooling feature, and densifying the overwrapped base preform to form the CMC component.

In a variation of this embodiment of method 500, the variation may include disposing a sacrificial support in the one or more channels prior to the overwrapping, and removing the sacrificial support after densification.

Embodiments in accordance with the present disclosure facilitate the creation of multi-walled, cooled CMC components for use in a turbine flow path environment. Various embodiments enable the creation of these features via a controlled machining process in the near-net preform shape and reduces variation in the process and the features. Various embodiments can also permit a manufacturing time savings, as all the plies may be laid up as a solid cross-section and be machined in the same operation, instead of trying to cut the features into each individual ply.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A preform (100; 200; 300) for a ceramic matrix composite (CMC) component having a flow path surface, consisting essentially of:
a base preform (100; 200; 300; 400) including a polyvinyl butyral (PVB) tackifier for dimensional stability and having a corresponding flow path surface;
one or more machined channels (110; 210) formed on the corresponding flow path surface of the base preform (100...400); and
one or more overwrap plies (120; 320; 420) disposed on the base preform (100...400)and covering the one or more machined channels (110; 210) to form a cooling feature (112; 312; 412).

2. The preform of claim 1, wherein the CMC component is a turbine component selected from a blade outer air seal (BOAS), a blade, a vane, and a combustor panel.

3. The preform of claim 1 or 2, wherein the one or more machined channels (110; 210) include an additional feature (440; 450).

4. The preform of claim 3, wherein the additional feature (440; 450) is a support rib (440) or a heat transfer feature (450) selected from a trip strip and a pin fin.

5. The preform of any preceding claim, further consisting of a sacrificial support (430) disposed in the one or more machined channels (110; 210) to support the one or more overwrap plies (120; 320; 420).

6. The preform of any preceding claim, wherein the cooling feature (112; 312; 412) is selected from a serpentine passage, a radial flow passage, and an impingement cavity.

7. A method of forming a cooling feature (112; 312; 412) on a flow path surface of a ceramic matrix composite (CMC) component of a turbine, consisting essentially of:
dimensionally stabilizing a base preform (100...400) with a polyvinyl butyral (PVB) tackifier, the base preform (100...400) having a corresponding flow path surface;
machining one or more channels (110; 210) on the corresponding flow path surface of the base preform (100...400); and
overwrapping one or more plies (120; 320; 420) onto the corresponding flow path surface of the base preform (100...400) to cover the one or more machined channels (110; 210) and form the cooling feature (112; 312; 412).

8. The method of claim 8, wherein the CMC component is selected from a blade outer air seal (BOAS), a blade, a vane, and a combustor panel.

9. The method of claim 7 or 8, further consisting of densifying the overwrapped base preform (100...400) to form the CMC component.

10. The method of any of claims 7 to 9, further consisting of machining an additional feature (440; 450) into the one or more channels, optionally wherein the additional feature is a support rib (440) or a heat transfer feature (450) selected from a trip strip and a pin fin.

11. The method of any of claims 7 to 10, further consisting of:
disposing a sacrificial flexible graphite sheet (430) in the one or more channels (110; 210) to support the one or more overwrap plies (120; 320; 420), and burning out the flexible graphite sheet (430) after densification; or
disposing a sacrificial molybdenum sheet (430) in the one or more channels (110; 210) to support the one or more overwrap plies (120; 320; 420), and leaching out the molybdenum sheet (430) with acid after densification.

12. The method of any of claims 7 to 11, wherein the cooling feature (112; 312; 412) is selected from a serpentine passage, a radial flow passage, and an impingement cavity.

13. The method of any of claims 7 to 12, wherein the machining is performed by milling, grinding, laser ablation, water-guided laser machining, or ultrasonic impact grinding.

14. The method of any of claims 7 to 13, wherein the overwrapping of one or more plies (120; 320; 420) comprises overwrapping one or two plies (120; 320; 420).

15. The method of claim 9 or of claims 10 to 14 as dependent on claim 9, further consisting of:
disposing a sacrificial support (430) in the one or more channels (110; 210) prior to the overwrapping; and
removing the support (430) after densification.
